# EUROPEAN PATENT APPLICATION

(11) **EP 1 862 072 A2**
(43) Date of publication of application: **05.12.2007**
(21) Application number: 07388038.7
(22) Date of filing: 29.05.2007
(51) Int. Cl.: A01N 65/00, A01P 3/00, A01P 21/00

(54) **A natural product containing fenugreek, tea and/or rosemary having fungus inhibiting and growth promoting effect for improving plant production and its use**

(30) Priority: 29.05.2006 DK 200600155
(71) Applicant: Nor-Natur ApS, 2650 Hvidovre (DK)
(72) Inventor: Bengtsson, Marianne Vibeke, 2860 Soborg (DK); Hockenhull, John Rodney, 2300 Copenhagen S (DK); Elgaard, Troels, 2660 Brondby Strand (DK); Nielsen, Beatrice Konstanze Klinzing, 2650 Hvidovre (DK); Damso, Mette, 2660 Brondby Strand (DK)
(74) Representative: Zeuthen-Aagaard, Henrik

(57) **Abstract**

A natural product having an fungus inhibiting and growth promoting effect for improving plant production including at least two of the following active substance containing components: (a) a component derived from tea *(Camellia* spp., e.g. *Camellia oliefera, Camellia sinensis, Camellia chekiangoleosa, C. drupifera, C.reticulate and C.japonica);* (b) a component derived from fenugreek *(Trigonella foenum-graceum);* and (c) a component derived from rosemary (Rosmarinus officinalis), thyme *(Thymus),* oregano *(Origanum),* sage *(Salvia)* and/or mint *(Mentha).*

The product has a fungus inhibiting effect preventing and curing fungal diseases as well as a growth promoting effect and is useful in plant production, mainly fruit and vegetable production, with improved yields and quality of the plant products.

## Description

### Technical field

The present invention relates to a natural product having fungus inhibiting and growth promoting effect for improving plant production.

### Technical background

It is well-known that fungal diseases can have important economic consequences e.g. in orchards and in vegetables growing. An example is apple, caused by the fungus *Venturia inaequalis,* which is the cause that most frequent cause of poor quality of apples. Apple scab causes brown or black spots on the fruit, and in some years and on some varieties attacks so heavily that the apples become very small, malformed and totally unfit for consumption. This fungal disease causes a heavy decline in yield and quality, both in organic and conventional production.

Some organic growers wish to use organic fungicides in attempts to control the fungus disease. In Denmark, only use of elemental sulphur is allowed, and this does not have any curative effect on apple scab. In other European countries, use of more effective lime sulphur and copper fungicides is permitted in organic apple production. The use of copper has been forbidden in organic apple growing in Denmark for more than 10 years and it is being phased out in the EU. Thus, there is a strong need for alternatives.

Also, in the conventional production of fruit and vegetables fungal diseases cause huge problems and chemical fungicides are used in large amounts in order to limit the damages. Some fungicides, e.g. pyrimethanil and tolylfluanid, which are declared as environmentally dangerous, poisonous and locally irritating, are used to a larger degree. The use of such fungicides can result in residues in fruit and vegetables and a recent estimation from the Danish Veterinary and Food Administration has shown that 61 percent of the apples tested contained fungicidal residues.

There is an increasing demand for products for use in plant production which provide **fungus inhibiting** or anti-fungal effects and are both environmental friendly and biocompatible. Furthermore, many of the known fungicides are based on synthetic products which are relatively costly and not always effective. Thus, there is an also a need for a cost effective alternative.

### Short description of the invention

In a first aspect the invention relates to a natural product having a **fungus inhibiting** and growth promoting effect for improving plant production including at least two of the following active substance containing components: (a) a component derived from tea *(Camellia* spp., e.g. *Camellia oliefera, Camellia sinensis, Camellia chekiangoleosa, C. drupifera, C.reticulate and C.japonica);* (b) a component derived from fenugreek *(Trigonella foenum-*graceum)*;* and (c) a component derived from rosemary (Rosmarinus officinalis), thyme *(Thymus),* oregano *(Origanum),* sage *(Salvia)* and/or mint *(Mentha).*

In a second aspect the invention relates to a use of the product for protection and improvement of the yield of plants.

In a third aspect the invention relates to a process for the preparation of the inventive natural product by mixing together least two of the active substance containing components (a - c), optionally with a suitable liquid or solid carrier or one or more conventional adjuvants or additives or any combination thereof.

The extent of applicability of the invention appears from the following detailed description. It should, however, be understood that the detailed description and the specific examples are merely included to illustrate the preferred embodiments, and that various alterations and modifications within the scope of protection will be obvious to persons skilled in the art on the basis of the detailed description.

### Detailed description of the invention

An alternative to copper, sulphur and chemical fungicides can be found in natural materials. It is known that many plants contain different functional, fungicidal and/or antibacterial substances, among others saponins, flavonoids, tannins, hydroxycymens and terpens, and using such active elements from plants in pharmaceuticals for use by humans and animals is also known. Besides fungis inhibition against plant pathogens, another mechanism is based on activating the natural defense mechanisms of the plant, which is also called "induced resistance".

The inventive product based on a combination of different saporin containing plant materials has a surprising fungus inhibiting and growth promoting effect leading to an improved yield and quality in plant production, for example in production of apples. Also in case of ornamental plants, both in plant nurseries, parks and gardens, and in forestry, the obtained protection and growth benefits obtained by the inventive product are contemplated. Accordingly the term "plant production" is intended to also cover growth and maintenance of such plants.

The product appears to have a prophylactic and curative effect against attacks by pathogenic fungi . The reason for these effect is not been completely understood, but it is believed to be based on a surfactant effect, a fungicidal or fungus inhibiting effect and/or induction of host resistance.

Accordingly, it is believed that the inventive combination of the mentioned plants both have an effect against the mentioned pathogenic fungi and improved effect on the yield and quality.

Examples are saponin-containing plants, which have shown fungicidal activity. Examples are *Quillaja saponaria,* which active elements are thought to be saponins that generally have a great toxic effect on fungi due to interactions with steroles on the membrane of the cells (Francis et al., 2002. The biological action of saponins in animal systems: A review. British Journal of Nutrition 88, 587-605).

Several patents describe quinoa and quillaja as a basis for protection of plants against bacteria diseases (US 2003162731 and US2005261129 and CA2482090) and as protection against both bacteria and fungal diseases (WO0160153). However, none of these patents describe a yield improving effect. Also, neither of the patents describe the botanical species *Camellia oliefera, Camellia chekiangoleosa, C.drupifera, C.reticulata* and *C.japonica* or *Rosmarinus officinalis* or Fenugreek *(Trigonella foenum-graecum). Camellia sinensis* is mentioned in WO0160153, but is distinct from the other named Camellia species, as C. *sinensis* is grown for the purpose of tea and the other species are grown for the seeds, especially for oil production from the seeds.

It is well known that tea *(Camellia* spp.) has been used as alternative medicine, especially in Asia for centuries. Tea is thought to have an effect against e.g. cancer, acting by immune stimulation and having an antimicrobial effect ( Ishihara et al., 2001 Improvement of intestinal micro flora balance and prevention of digestive and respiratory organ diseases in calves by green tea extracts. Livestock Production Science 68, 217-229). The effect is often said to be a result of the content of polyphenols in tea, primarily catechins, which have a large antioxidative capacity. The content of saponins in tea and tea products might as well have a useful effect, e.g. against fungal diseases in plant production.

One or more of the active components in the product can be obtained from bi-products, which are results of the production of conventional plant products. The product is partly based on waste products that do not have any other practical application at the moment, which makes the active components very cheap and cost effective and simplifies production of the product.

The product, according to some embodiments of the invention can contain an active component (component a), which has been obtained on the basis of tea (*Camellia* spp., e.g. *Camellia oliefera, Camellia sinensis, Camellia chekiangoleosa, C. drupifera, C.reticulate and C.japonica*)*.*

The component based on tea can be based on dried and milled parts, primarily leaves from the tea plant or an extract of this. The component does as well include products based on tea seeds or tea seed fruits, which comes from a tea plant from the Camellia genus that bear fruits, called Tea Seed. The fruit contains oil, which can be extracted for food and cosmetics. The by-product from the oil pressing is called "Tea Seed cake". The Tea Seed cake, which is a result of this, is pressed and dried. The component may also include bi-products from such tea-based products. The component can be based on extracts from Tea Seed cake as well as other by-products. The extract can be based on water, alcohol or a combination of these.

The product can according to some embodiments of the invention contain a type of an active component (component b), which can be obtained on the basis of fenugreek.

The product can according to some embodiments of the invention contain a type of an active component (component c), which can be obtained on the basis of rosemary, thyme, oregano, sage and/or mint.

The component based on rosemary, thyme, oregano, sage and/or mint can be derived from the dried and milled top or an extract of rosemary, thyme, oregano, sage and/or mint. The component also includes by-products, for example from the production of oils. The extract can be based on water, alcohol or a combination of these.

In some embodiment of the invention the product may include a type of an active component (component d), which may be obtained on the basis of another saponine containing plant.

Generally, the components (a), (b), and (c) as well as the optional component (d) are obtained from plants; and/or part of plants including stems, leaves, twigs, bark, seeds, shells; and/or by-products based on plants and/or part of plants; and/or extracts based on plants and/or part of plants; and any combination thereof.

Press rest products from tea production can immediately after the extraction of the oil be dried down to a water content of maximum 8-15 weight%, usually a maximum water content of 10 % water, or possibly down to 8 % water, or it can be preserved, for example by the addition of 0 to 10 weight% NaCl, or another salt, and afterwards stored for later drying, or it can be preserved. To further ensure quality, it is an advantage to add 0 to 5 % of a for the purpose acceptable acid, such as citric acid, tartaric acid, or lactic acid or a combination of these, which addition at the same time has a positive influence on the products effect, one of the reasons being that anthocyanin and citric and tartaric acid works as a synergist. Likewise, it can be an advantage to add sodiumbenzoat or potassiumsorbat

The pressed by-products and the dried and milled plant leaves can to a necessary extent further be preserved by removal of a part of the water in the product. This can be done by filtering, by extraction, by centrifugation and by other conventional methods. Fenugreek, tea, Tea Seed, rosemary, byproducts from production of oil as well as other saponin containing plants, contain a series of interesting active substances. Among the most important are saponins, both triterpene and steroid saponins, and polyphenols.

The product has according to the invention among others the following positive effects:
- Protection against fungal diseases in plant production, mainly in fruit and vegetable production. The protection can both be preventive and curative.
- Improvement of plant yield

The reason for the protection and the fungus inhibiting effect has not been completely explained, but it is believed to be based on a surfactant effect, a fungicidal effect and/or an induction of host resistance.

In some embodiments of the invention it may be used in combination with known conventional fungicides. In that way a reduced amount of hazardous substances may be used and thus provide a more environmental friendly product for use in plant production.

The product according to the invention can with great benefit be used especially in fruit production, but also in vegetable production. The additive according to the invention can with great benefit be used in fruit and vegetable production. The following can be mentioned:
Foliage diseases such as
   Apple scab *(Venturia inaequalis)*
   Cherry leaf spot (*Blumeriella jaapii*)
   Black spot of roses *(Marssonina rosae)*
   Pear scab *(Venturia pirina*)
Powdery mildew on different plants such as
   Rose powdery mildew *(Sphaerotheca pannosa* var. *pannosa)*
   Begonia powdery mildew *(Microsphaera begoniae)*
   Apple and pear powdery mildew (*Podosphaera leucotricha*)
   American gooseberry mildew *(Sphaerotheca mors-uvae)* attacking blackcurrant and gooseberry *(Ribes* spp.)
   Strawberry powdery mildew *(Sphaerotheca macularis)*
   Grape powdery mildew *(Unicula necator)*
   Cucumber powdery mildew *(Erysiphe cichoracearum* and other powdery mildew fungi attacking *Cucurbita & Cucumis* spp.)
   Other powdery mildew pathogens on other plants
Postharvest diseases on fruit such as
   Brown rot / Spur canker *(Monilia fructigena, M. laxa)*
   Penicillium Rot *(Penicillium expansum)*
   Gloeosporium Rot / Gloeosporium canker *(Pezicula alba, P. malicorticis)*
Downy mildews & late blight
   Fungi-like pathogenic organisms within the Oomycota including in particular important members of *Peronosporaceae* causing downy mildews including for example grape downy mildew *(Plasmopara viticola),* cucumber downy mildew *(Pseudoperonospora cubensis),* onion downy mildew *(Peronospora destructor)* and other species on other plants and also members of *Pythiaceae* causing late blight of plants belonging to Solanaceae including *Phytophthora infestans* attacking potatoes and tomatoes.
Other serious plant diseases such as
   Sooty blotch *(Gloeodes pomigena*) and fly speck *(Zygophiala jamaicensis)* on apples
   Grey mould *(Botrytis cinerea)* on different plants such as *Pelargonium* spp.
   Peach leaf curl *(Taphrina deformans)*
   Pear rust *(Gymnosporangium sabinae*/*G. fuscum)*
   Canker *(Nectria galligena)* on fruit trees
   Rust *(Phragmidium tuberculatum* and other *Phragmidium* species) on roses (Rosa spp.)

The mentioned diseases are only examples, since it is expected, that the present invention has an effect on a wide range of fungal diseases as well as a having an improved effect on plant yield. Surprisingly, it has been shown that a product in the form of a combination of at least two different sources of natural active elements, e.g. chosen among components extracted from tea and fenugreek and other plant materials, is an outstanding solution to these problems, probably because of a synergistic effect. However, it is also assumed that other unknown mechanisms contribute to the surprising effect, which arises by mixing natural active elements from different plants.

### Formulation of commercial products according to the invention

Depending on the concentration and variation of relevant substances in the raw materials it can be necessary, according to the invention to mix the raw material with a suitable carrier, so that a final product is made, which both is reasonably standardized and in a technically suitable form, not too concentrated so that it can be mixed directly at the fungicide producers, as well by the farmer himself.

To obtain the mentioned characteristics of the commercial products, suitable carriers or anticoagulation remedies are made. Primarily mineral carriers in the form of siliciumoxides, clay minerals, and zeolites, especially sepiolite, clinoptilolite and sipernate - and secondary vegetable carriers such as wheat flour, wheat bran, soy bran meal, etc. and calcium carbonate can also be a usable carrier, not as much because of its technical abilities, but because of its low price. The same goes for grape seed flour, which is a known carrier, commonly used in animal food. Maltodextrin is likewise a commonly used technical substance.

The dosage of the product will typically pr. ha be 0.1-100 kg of component a and/or 0.1-100 kg of component b and/or 0.1-100 kg of component c, calculated as dry matter. The dosage can favorably be 1-50 g of the single possible component and more specifically 10-50 g of the single components.

The total quantity (a,b and c) with two or more components is typically 0,1-300 kg calculated as dry matter used pr ha., such as 1-100 kg, especially 10-50 kg per ha.

The additive contains at least two of the mentioned components, for example in the weight ratio 1:99 to 99:1, mainly 80:20 to 20:80, especially 70:30 to 30:70.

With three components, the ratio between each of two components can likewise be 1:99 to 99:1, mainly 80:20 to 20:80, especially 70:30 to 30:70 or 50:50.

In some embodiments of the invention, the components are added in the following weight proportions (for usage pr ha.)
1: 1-10 kg of component c (tea) + 1-10 kg of component b (quinoa);
2: 1-10 kg of component c (tea) + 1-5 kg of component a (quillaja) + 1-5 kg of component b (quinoa);
3: 1-10 kg of component c (tea) + 1-10 kg of component a (quillaja)
4: 1-10 kg of component a (quillaja) + 1-10 kg of component (quinoa);

The above noted weight proportions refer to dried extracts. If the plant material is used in another form, for example if the components are in the form of dried, milled leaves or in a liquid extract, the quantity should be such that it contains a corresponding quantity of active substances.

The additive according to the invention has shown a substantial and surprising influence on the control of fungal diseases. It is expected that the additive also has an effect on the control of other plant diseases.

In some embodiments the invention relates to use of the product for yield improvement in plant production for example in fruit and vegetable growing.

In some embodiments the invention relates to use of the product for prophylactic (preventive) and/or therapeutic (curative) purposes.

In some embodiments the invention relates to methods for controlling fungal diseases in plant production, for example in fruit growing where apple scab is caused by the fungus Venturia inaequalis and in vegetable growing, as well as methods for controlling other diseases.

### Examples

For the verification of the product, a series of tests have been made on apple seedlings grown under controlled conditions in growth chambers.

### Material and method:

Seeds from apple *(Malus* x *domestica* 'Golden delicious' is stratified at 4°C in about 3 weeks, potted separately in soil and grown at 15°C (12 hours light / 12 hours dark) in approximately 4 weeks until the plants have minimum 4 leaves.

Inoculum of a single spore isolate of *Venturia inaequalis* is made (1.5 x 10⁵ conidia / ml) by the method according to Williams (Williams, E.B. 1978. Handling the apple scab organism in laboratory and greenhouse. Proceedings of Apple and Pear Scab Workshop, Kansas City, Missouri, July 1976. New York State Agricultural Experiment Station, Geneva. Special Report 28: 16-18) and stored at -18°C until usage.

Extracts of plant products are tested separately or in combinations.
Aqueous suspensions of liquid plant products are made in concentrations for example 5%, 2½% and 1% (w/v). Aqueous extracts of milled plant products are made in the concentrations 5%, 2½% and 1% (w/v) and filtered through polyester mesh. The combinations of products are tested in concentrations, for example 2½% and 1%. As reference treatment, sulphur (0.27% w/v) and water (control) is used.

Apple seedlings are inoculated, with a hand sprayer incubated under polyester cover without light for 2 days. The day before (preventive testing) or the day after (curative testing) extracts of plant products are added by hand sprayer (8 plants per treatment). The plants are incubated, at 15°C in (12 hours light / 12 hours darkness) under a clear polyester cover with ventilation holes in two weeks after inoculation, after which the symptoms of apple scab are assessed on inoculated and treated leaves, on a scale of 0-7 (0= no symptoms, 7= More than 75% attacked leaf area). Effect of treatment is analyzed statistical with SAS, version 8.2 (Statistical Analysis System, SAS Institute, Cary, NC).

### Example 1

### RESULTS

The following products have been test separately and in combinations:
- FENUGREEK powder: liquid aqueous extract of milled fenugreek
- TEA: Extract of Tea Seed Cake
- Rosemary cake: Byproduct after extraction (aqueous/ethanolic) of rosemary leaves
- Rosemary saponins: Liquid extraction of rosemary cake

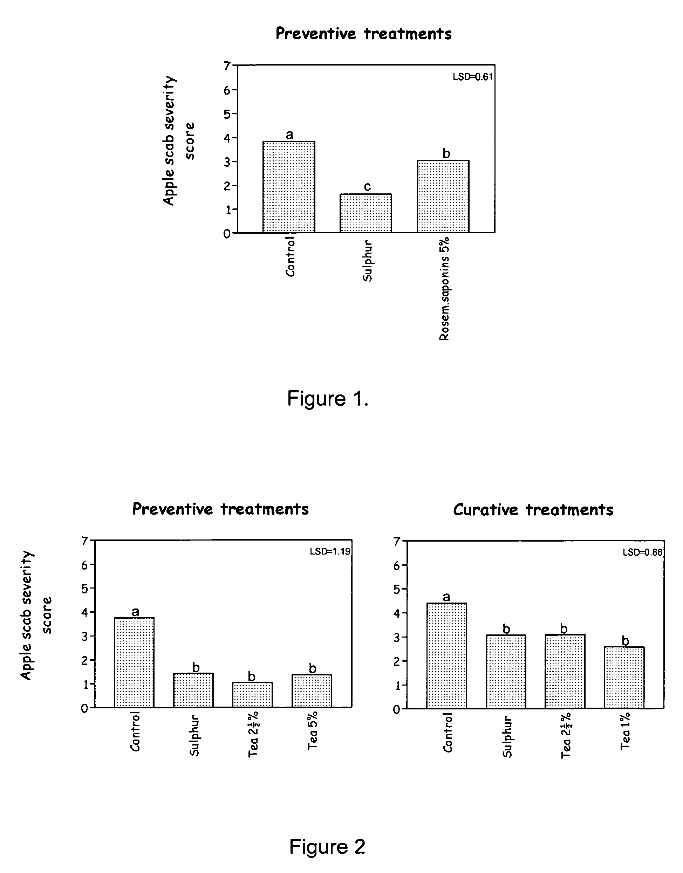

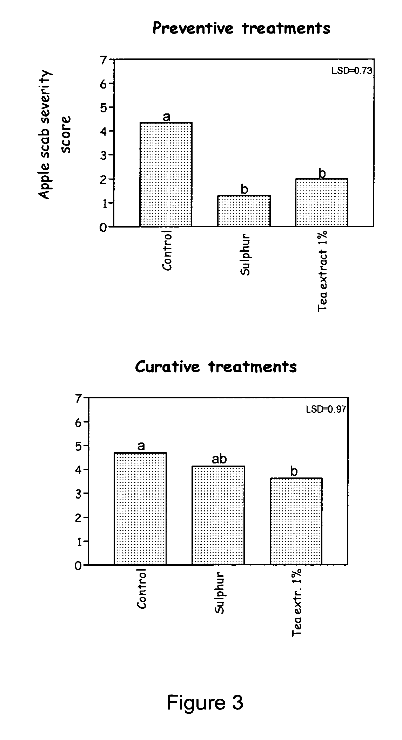

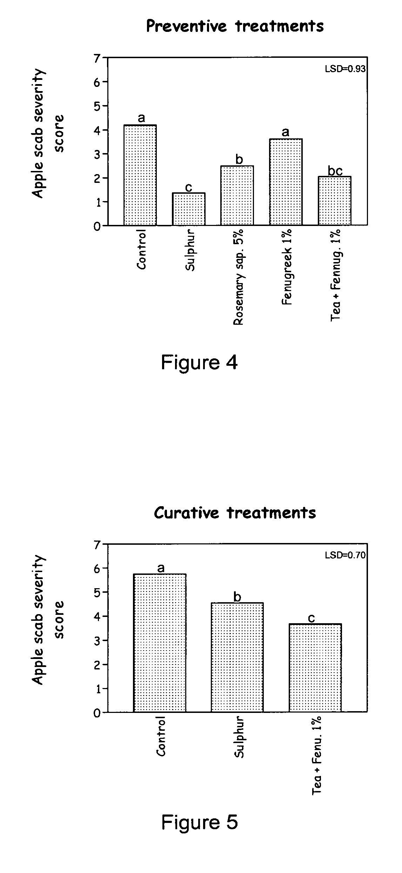

The following results shown in the figures 1 - 5 are from one preventive and one curative trial with fenugreek, tea and rosemary tested separately and in combinations,
where the total concentration has been 1% - 5%.

### Description of figures 1 - 5

Figure 1. Apple scab symptoms (0 = no symptoms, 7 = more than 75% scab covering the leaves) on apple plants treated preventive with 5% extracts of the plant products Rosemary cake compared with water (control) or sulphur (0.27%).
Figure 2. Apple scab symptoms (0 = no symptoms, 7 = more than 75% scab covering the leaves) on apple plants treated preventively (left) and curatively (right) respectively with 1, 2.5% and 5 % extracts of the plant product Tea extract compared with water (control) or sulphur (0.27%).
Figure 3. Apple scab symptoms (0 = no symptoms, 7 = more than 75% scab covering the leaves) on apple plants treated preventively (left) and curatively (right) respectively with 1% extracts of the plant product Tea extract compared with water (control) or sulphur (0.27%).
Figure 4. Apple scab symptoms (0 = no symptoms, 7 = more than 75% scab covering the leaves) on apple plants treated preventively with 1 and 5% extracts of the plant product Fenugreek, Rosemary sap. and Tea extract compared with water (control) or sulphur (0.27%).
Figure 5. Apple scab symptoms (0 = no symptoms, 7 = more than 75% scab covering the leaves) on apple plants treated curatively respectively with 1 % extracts of the plant product Fenugreek and Tea extract compared with water (control) or sulphur (0.27%).

The trials showed that some of the single elements and some combinations have an improved effect compared with sulphur and the control, as well as a preventive treatment and as curative treatments.

The above description of the invention reveals that it is obvious that it can be varied in many ways. Such variations are not to be considered a deviation from the scope of the invention, and all such modifications which are obvious to persons skilled in the art are also to be considered comprised by the scope of the succeeding claims.

## Claims

1. A natural product having a fungus inhibiting and growth promoting effect for improving plant production including at least two of the following active substance containing components:
a. a component derived from tea *(Camellia* spp., e.g. *Camellia oliefera, Camellia sinensis, Camellia chekiangoleosa, C. drupifera, C.reticulate and C.japonica) ;*
b. a component derived from fenugreek (*Trigonella foenum-graceum*) *;* and
c. a component derived from rosemary (Rosmarinus officinalis), thyme *(Thymus),* oregano *(Origanum),* sage *(Salvia)* and/or mint *(Mentha).*

2. Product according to claim 1 **characterised in, that** the components (a), (b), and (c) are obtained from plants; and/or part of plants including stems, leaves, twigs, bark, seeds, shells; and/or by-products based on plants and/or part of plants; and/or extracts based on plants and/or part of plants; and any combination thereof.

3. Product according to any of the previous claims, formulated as a preparation including:
a. 0.1 - 99.9 % by weight of the component (a); and/or
b. 0.1 - 99.9 % by weight of the component (b); and/or
c. 0.1 - 99.9 % by weight of the component (c);
based on the total amount of the components (a), (b), and (c) calculated as dry matter.

4. Product according to any of the previous claims, formulated as a preparation including:
a. 10 - 90% by weight of the component (a); and/or
b. 10 - 90% by weight of the component (b); and/or
c. 10 - 90% by weight of the component (c);
based on the total amount of the components (a), (b), and (c) calculated as dry matter

5. Product according to any of the previous claims formulated as a preparation in a form suitable for distribution on a plant production area **characterised in, that** the total amount of the components (a), (b), and (c) in the preparation is 0.01 to 300 kg calculated as dry matter per ha of the plant production area.

6. Product according to claim 5 **characterised in, that** the total amount of the components (a), (b), and (c) in the preparation is 1 to 100 kg calculated as dry matter per ha of the plant production area.

7. Product according to claim 5 **characterised in, that** the total amount of the components (a), (b), and (c) in the preparation is 10 to 50 kg calculated as dry matter per ha of the plant production area.

8. Use of the product according to any of the claims 1-7 for protection and improvement of the yield of plants.

9. Use of the product according to claim 8 for prophylactic and/or therapeutic purposes.

10. A process for the preparation of the natural product according to any one of the claims 1 - 7, **characterized by** mixing together least two of the following active substance containing components (a - c):
a. a component derived from tea *(Camellia* spp., e.g. *Camellia oliefera, Camellia sinensis, Camellia chekiangoleosa, C. drupifera, C.reticulate and C.japonica*) *;*
b. a component derived from fenugreek *(Trigonella* foenum-graceum); and
c. a component derived from rosemary (Rosmarinus officinalis), thyme *(Thymus),* oregano *(Origanum),* sage *(Salvia)* and/or mint *(Mentha),*
optionally with a suitable liquid or solid carrier or one or more conventional adjuvants or additives or any combination thereof.
